# EUROPEAN PATENT APPLICATION

(11) **EP 1 749 760 A1**
(43) Date of publication of application: **07.02.2007**
(21) Application number: 06015966.2
(22) Date of filing: 01.08.2006
(51) Int. Cl.: B65D 85/34, B65D 33/01

(54) **Container for fruit and vegetables products**

(30) Priority: 05.08.2005 IT BO20050049
(71) Applicant: SORMA S.P.A., 47023 Cesena FO (IT)
(72) Inventor: Pernici, Mauro, 47023 Cesena (IT)
(74) Representative: Brogi, Graziano

(57) **Abstract**

A container (1) for fruit and vegetable products (P) characterised by the fact that it includes a mesh strip (2) and a sheet of plastic film (3) with the edges (4, 5) joined to each other in order to form packaging whose sheet forms the bottom of the container (1) and substantially defines a compartment in which to store the products (P), and that is closed on top by the mesh strip (2).

## Description

This invention has as subject-matter a container for fruit and vegetable products.

In this specific industry, it is known that mesh containers are used to package products of a certain consistency such as citrus fruit, onions, peppers, tomatoes, peaches, apricots and so on.

Another well-known type of container involves solid packaging including a plastic punnet containing fruit and vegetable products, around which a net is wound to allow the products to be seen.

In order that the products contained in the punnet are preserved intact as long as possible, the latter is perforated in order to ensure certain airing.

However, once the handling period has terminated, it is possible that the crushing sustained by the products during transportation and handling provokes a natural release of juices, which, leaking out through the perforations, provokes smears or compromises product quality and presentation.

Therefore, the technical task of this invention consists in realising a container that provides remedies to the inadequacies of the well-known containers.

Within the realm of this task, one of the goals of this invention is a container which can be realised by exploiting both materials that are readily available on the market as well as simple, reliable technology in order to obtain highly economic results.

A further object of the present invention consists in realising a container with elevated structural stability, able to ensure considerable protection of the products contained therein.

This task and these objects are achieved by the realisation of a container for fruit and vegetable products characterised by the fact that it comprises a mesh strip and a sheet of plastic film with joined edges in order that they form packaging whose sheet forms the bottom of the container and substantially defines a compartment in which to store the products, and that is closed on top by the mesh strip.

Further advantages and details of this invention shall be more clear by the following description of the two preferred (but not exclusive) illustrated embodiments in which it is to be realised and the enclosed drawings in which:
figure 1 shows a perspective view of a container according to a first embodiment;
figure 2 shows a view of a sectioned container taken along a II-II plan of figure 1;
figure 3 shows a view of a container according to a further embodiment, and finally,
figure 4 indicates the view of the container in figure 3 according to a section taken along a plan IV-IV.

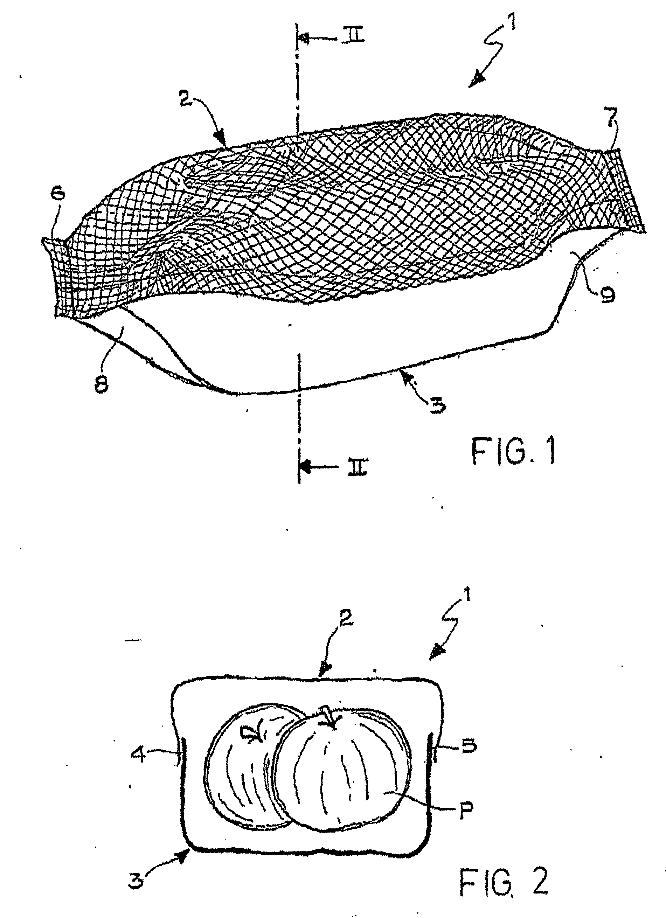

In reference to cited figures 1 and 2, the container is indicated as a whole by 1 and compound by a mesh strip 2 and a sheet 3.

The mesh 2 is obtained from a mesh strip in a plastic material or from natural strands (i.e. cotton), while the sheet 3 is obtained from a strip of plastic material aimed at being joined, through normal welding, with the material from the strip 2. In order to prevent ambiguity in this description, hereinafter the strip 3 shall be referred to as the "film".

For example, and only by way of an example, a possibility is provided for welding the edges of the mesh strip from which the strip 2 is obtained, with the edges of the film from which the sheet 3 is obtained, thus giving rise to a sort of tube with two longitudinal welded lines 4 and 5, which, once closed at the opposite extremities by the two transversal, welded lines 6 and 7, defines the space (compartment) containing the products.

Duly, the terminal, opposite portions of the sheet 3 are folded inwards under the mesh strip 2 to form - from both sides of the container - two respective gussets 8 and 9, which have the goal of giving the container a square shape.

From the aforementioned details, it is obvious that once the perimeter of the sheet 3 is associated to the strip 2, it becomes the bottom of a type of punnet aimed at receiving products "P" and from which products "P" are prevented from leaving by the mesh strip 2, which, nevertheless, allows the products to be constantly inspected.

The material of sheet 3 can be of any consistency.

Advantageously, it has a rigid or semi-rigid consistency in order to allow the bottom of a punnet to be formed with sufficiently-strong edges allowing containers to lie on top of each other without collapsing and allowing the convenient handling of the containers, while safeguarding the integrity of the products.

From the aforementioned details, it is obvious that the packaging of the container can be realised by beginning with a bobbin wound strip including a mesh strip and a film in plastic material, joined longitudinally to each other along a central edge so that the strip has one side edge constituted by the mesh and the other by the film.

Completion of the container includes a longitudinal, tubular fold of the strip and the superimposition and welding to each other of the side, longitudinal edges of the mesh strip and the film and finally, the transversal welding thereof after the products have been introduced.

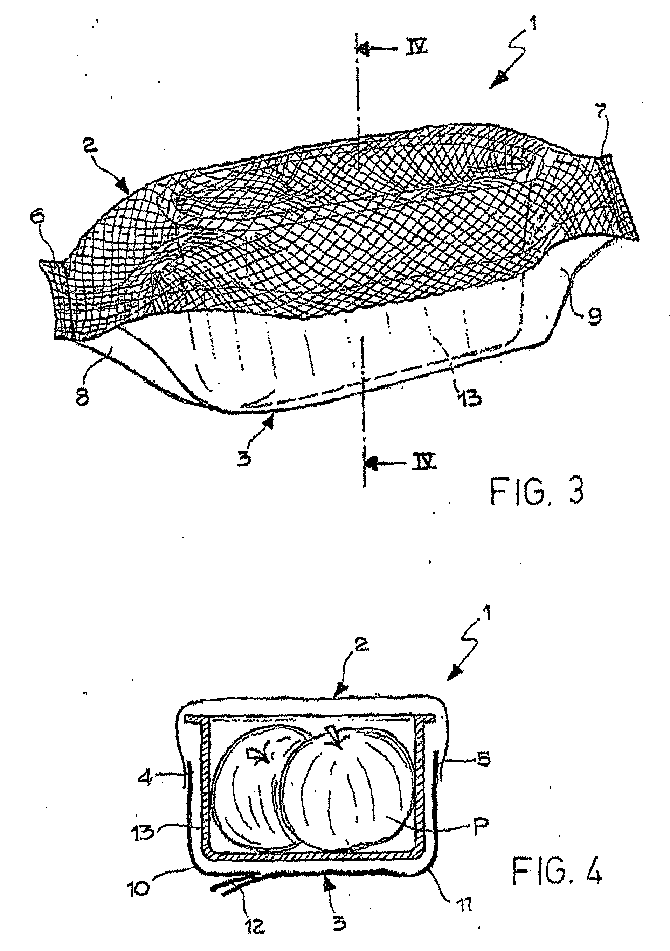

Figures 3 and 4 illustrate a variation of the packaging according to this invention, deriving from a mesh strip 2 and a sheet 3 in plastic material, which in turn is composed of two portions (10 and 11) joined to each other along a welded line 12 extending longitudinally in the bottom of the container.

In this case, the formation of the packaging begins with a single bobbin wound strip including mesh central strip 2 and a pair of plastic films 10 and 11, each welded to a respective side edge of the central mesh strip.

During the phase in which the packaging is being shaped, the side edges of the strip, that is the edges of the plastic films, will be overlapped and welded to each other to create the welded line 12 in the bottom of the container.

As can be seen, the described container perfectly achieves the pre-set objects.

Specifically, it is to be noted that the fold of the film (3) in plastic material determines the formation of longitudinal folds acting as stiffening ribs for the container, which even allow forming solid containers of large sizes and transporting relatively heavy products.

The container described is susceptible to numerous modifications and variations, which are all part of the same innovative concept.

For example, the container can act as packaging to a punnet 13, see figures 3 and 4, and to contain and protect products that are particularly delicate when handled, such as strawberries for example.

In this case, it will not be necessary to make use of a particularly rigid sheet.

Another solution provides for the application of a band whose extremities are joined to the bottom of the container to act as a transport handle.

In the practical implementation of this invention, the shapes, sizes and choice of the material can vary at will, depending on specific needs.

## Claims

1. A container (1) for fruit and vegetable products (P) **characterised by** the fact that it comprises a mesh strip (2) and a sheet (3) of plastic film with the edges (4, 5) joined to each other in order to form packaging whose sheet (3) forms the bottom of the container (1) and substantially defines a compartment in which to store the products (P), and that is closed on top by the mesh strip (2).

2. A container (1) according to claim 1, **characterised by** the fact that the opposite terminal portions of the sheet (3) are folded inwards under the mesh strip (2) to form, from both sides of the container, two respective gussets (8, 9).

3. A container (1) according to claim 1 or 2, **characterised by** the fact that the material of the sheet (3) has a rigid or semi-rigid consistency.

4. A container (1) according to one of the preceding claims, **characterised by** the fact that the packaging of the container (1) is realised starting with a bobbin wound strip and is composed of a mesh strip (2) and a film (3) in plastic material, which are longitudinally joined to each other along a central edge in order to have one side edge constituted by the mesh and the other by the film; said container being then completed by making a longitudinal, tubular fold of the strip and the superimposition and welding to each other of the side, longitudinal edges (4, 5) of the mesh strip (2) and the film (3) and finally, by transversally welding (6, 7) the container closed after the products (P) have been introduced.

5. A container (1) according to anyone of claims 1 to 4, **characterised by** the fact that the bottom of the packaging is constituted by a pair of plastic films (10, 11), each of which has an edge welded to a respective side edge of the central, mesh strip (2); as the side edges of said plastic films are welded to each other, they create a welded line (12) in the bottom of the container (1).

6. A container (1) according to claim 5, **characterised by** the fact that the packaging is realised starting from a single bobbin wound strip including a central, mesh strip (2) and a pair of side strips in plastic film (3), each of which is welded to a respective side edge (4, 5) of the central, mesh strip (2).

7. A container (1) according to one of the aforementioned claims, **characterised by** the fact that it includes a punnet (13) that contains and safeguards the products (P).

8. A container (1) according to one of the preceding claims, **characterised by** the fact that it includes a band whose extremities are joined to the bottom of the container (1) to act as a transport handle.

9. A container (1) for fruit and vegetable products (P), according to which can be inferred from the aforementioned description and the enclosed drawings.
